## Europäisches Patentamt
## European Patent Office
## Office européen des brevets

(19)

(11) Numéro de publication: **0 045 231**
**B1**

(12)

# FASCICULE DE BREVET EUROPEEN

(45) Date de publication du fascicule du brevet:
24.10.84

(51) Int. Cl.³: **B 60 T 13/54**, B 60 T 11/20

(21) Numéro de dépôt: **81401095.5**

(22) Date de dépôt: **08.07.81**

(54) Système générateur de pression de freinage.

(30) Priorité: **30.07.80 ES 494698**

(43) Date de publication de la demande:
**03.02.82 Bulletin 82/5**

(45) Mention de la délivrance du brevet:
**24.10.84 Bulletin 84/43**

(84) Etats contractants désignés:
**DE FR GB**

(56) Documents cités:
**DE - B - 1 131 534**
**FR - A - 2 361 258**
**US - A - 2 603 066**

(73) Titulaire: **BENDIBERICA S.A., Balmès 243,**
**Barcelona 6 (ES)**

(72) Inventeur: **Bacardit, Juan Simon, C/Mallorca 451, 6 4a. A,**
**Barcelona 13 (ES)**
Inventeur: **Bofill, Joaquin Ferret, C/Mallorca 93, 5 3a.,**
**Barcelona 29 (ES)**
Inventeur: **Coll, Juan Villaronga, C/Escoles 50, La**
**Llagosta (Barcelona) (ES)**

(74) Mandataire: **Le Moenner, Gabriel et al, SERVICE**
**BREVETS BENDIX 44, Rue François 1er, F-75008 Paris**
**(FR)**

# Description

La présente invention concerne un système générateur de pression de freinage pour véhicule automobile, du type comprenant un maîtrecylindre comportant au moins un piston primaire pour au moins un circuit de frein hydraulique, couplé à un amplificateur de force de freinage à dépression comportant une première et seconde parois axialement opposées, un diaphragme ou piston divisant l'amplificateur de force de freinage en une enceinte de pression et une enceinte atmosphérique, et une valve de commande de l'amplificateur, disposée dans une partie de moyeu du piston et couplée mécaniquement, pour son actionnement, à un organe d'actionnement reliée à la pédale de frein, le piston primaire du maître-cylindre étant relié au piston de l'amplificateur par une tige creuse d'actionnement.

Un tel système est décrit dans le document DE-B-1 131 534.

Dans les systèmes de ce type, le maître-cylindre est monté en porte-à-faux sur la face avant de l'amplificateur à dépression, le système étant fixé sur le véhicule, typiquement sur la cloison pare-feu séparant le compartiment moteur de l'habitacle du véhicule, par la paroi arrière de l'amplificateur à dépression. L'agencement général de ces systèmes pose des problèmes d'encombrement au montage dans le compartiment moteur et impose une structure relativement lourde et robuste pour l'amplificateur à dépression.

La présente invention a pour objet de proposer un nouveau système générateur de pression du type défini plus avant, de structure simple et de configuration compacte offrant une meilleure logeabilité, et de fonctionnement fiable et précis.

Pour ce faire, selon une caractéristique de l'invention, le maître-cylindre est solidarisé à la première paroi de l'amplificateur correspondant à l'enceinte atmosphérique et comporte, à son extrémité opposée à l'amplificateur un poussoir coulissant récepteur de la tige de pédale de frein, la valve de commande communiquant en permanence avec l'atmosphère par un orifice central formé dans la seconde paroi de l'amplificateur correspondant à l'enceinte à dépression et étant actionnée par une tige de commande s'étendant dans la tige creuse d'actionnement et couplée, à ses extrémités opposées, au poussoir coulissant et à un organe mobile formant clapet de la valve de commande.

Le document US-A-2 603 066 décrit une unité tandem d'amplification de pression de freinage destinée à être interposée entre la sortie d'un maître-cylindre non assisté et un circuit de freins et comportant un cylindre amplificateur couplé à un servomoteur à dépression par une tige d'actionnement fonctionnement en traction. L'unité comporte en outre une valve à plongeur de commande sensible à la pression fournie par le maître-cylindre et commandant la valve de distribution du servomoteur à dépression. Le système de freinage décrit dans ce document est de structure complexe, d'encombrement axial important et impose une course morte excessive à la pédale.

Selon une autre caractéristique de l'invention, un organe élastique annulaire de réaction est prévu entre le poussoir coulissant et le piston primaire du maître-cylindre.

La présente invention sera bien comprise au vu de la description suivante de modes de réalisation particuliers, faite en référence avec les dessins annexés, dans lesquels:

– la figure 1 est une coupe axiale d'un amplificateur de force de freinage à dépression selon l'invention, où l'on a supposé que le maître-cylindre proprement dit est situé en dehors de la figure, à gauche de cette dernière;

– la figure 2 est une vue similaire à la précédente, dans lequelle le maître-cylindre fait partie de la paroi du côté de l'enceinte d'actionnement atmosphérique de l'amplificateur à dépression;

– la figure 3 est une vue équivalente aux précédentes, dans laquelle la pièce de la paroi arrière du maître-cylindre est partiellement logé à l'intérieur de l'amplificateur à dépression;

– la figure 4 montre une autre variante, dans laquelle on a prévu un dispositif de réaction hydraulique.

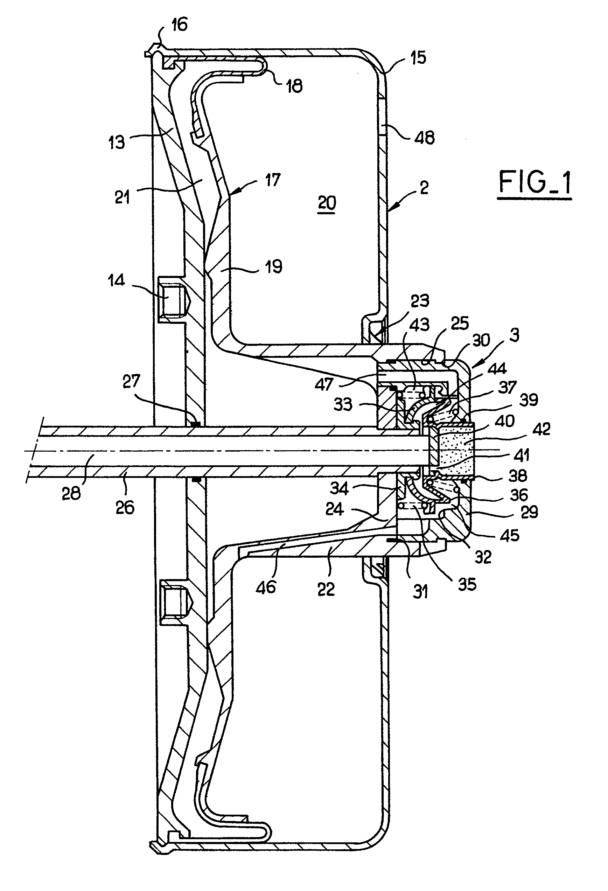

Les figures 1 à 3 représentent un système générateur de pression à maître-cylindre amplificateur de pression à assistance par dépression, comprenant le maître-cylindre proprement dit ou le cylindre hydraulique 1 (éloigné dans le cas de la figure 1), une chambre ou amplificateur à dépression 2 et une valve de commande 3. Le cylindre hydraulique 1 est destiné à alimenter deux circuits de frein indépendants (conduits de sortie 4 et 5) à partir de deux alimentations de fluide hydraulique 6 et 7, en conséquence de quoi il est pourvu d'un piston primaire 8 et d'un piston secondaire 9, montés en tandem à l'intérieur du cylindre et séparés au moyen de ressorts hélicoidaux 10 de façon à définir deux enceintes de pression indépendantes 11 et 12, correspondant aux circuits de freins mentionnés. La chambre de dépression comprend une paroi arrière 13, pourvue de protubérances munies d'orifices filetés 14 pour la fixation du dispositif sur le point d'utilisation, une paroi avant 15, fixée rigidement et hermétiquement à la paroi 13 au moyen d'un agraffage périphérique 16 et un piston d'assistance, portant la référence générale 17 et formé par un diaphragme flexible annulaire 18 qui est fixé périphériquement sur l'agraffage 16, et par son bord intérieur sur un plateau rigide 19, de telle manière qu'il définit à l'intérieur de la chambre de dépression une enceinte d'aspiration 20 et une enceinte atmosphérique 21.

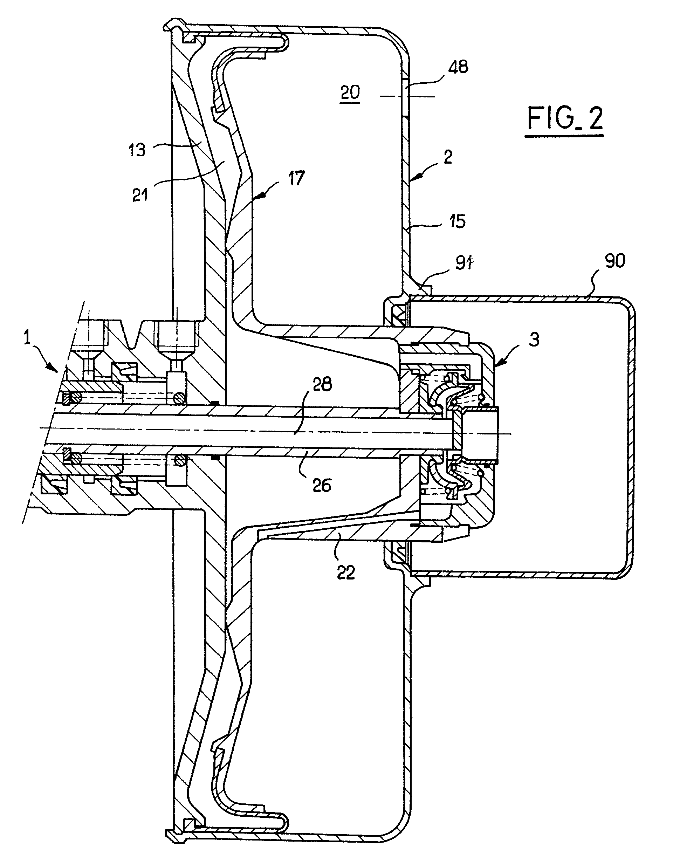

Le plateau 19 se prolonge centralement en un moyeu tubulaire 22 ayant une surface extérieure cylindrique et dépassant de la paroi avant 15 de la chambre de dépression à travers un orifice central de cette dernière avec lequel il s'ajuste hermétiquement au moyen d'un dispositif de joint 23. Près de l'extrémité extérieure du moyeu 22 se trouve une cloison diamétrale 24 qui sépare deux enceintes; l'enceinte intérieure fait partie de l'enceinte d'actionnement atmosphérique 21, tandis que l'enceinte extérieure 25 forme un logement pour le montage de la valve de commande de commande 3. La cloison 24 comporte fixée rigidement, une tige tubulaire 26 qui la traverse et qui sort à l'extérieur de la chambre de dépression à travers un orifice pourvu d'un joint 27, prévu sur la paroi avant 13; cette tige peut être fixée à un maître-cylindre éloigné, non représenté à la figure 1, ou bien à un maître-cylindre faisant partie de la paroi 13, comme le montrent les figures 2 et suivantes. Une tige de commande 28 coulisse librement à l'intérieur de la tige tubulaire 26. Son extrémité gauche reçoit l'actionnement tel qu'on le décrira plus loin et son extrémité droite débouche dans l'enceinte 25 pour la valve de commande 3.

Dans le cas des figures 1 à 3, la valve de commande 3 comprend un boîtier en forme de cuvette 29 fixée hermétiquement dans l'enceinte 25 au moyen d'un agraffage 30 et d'un joint 31. Sa surface interne forme un siège intermédiaire 32, avec lequel coopère on obturateur en forme de coupe 33, fixée sur une pièce 34 qui coulisse sur l'extrémité de la tige d'assistance 26 et est sollicité vers la position de fermeture par un ressort de compression 35. D'autre part, à l'intérieur du contour du siège intermédiaire 32 se trouve un autre obturateur 36, qui est appliqué contre l'obturateur 33 par un ressort de compression 37, et qui se prolonge en avant en un manchon 38, coulissant hermétiquement, au moyen d'un joint 39 dans un orifice axial du fond de la cuvette 29. L'extrémité intérieure de ce manchon présente un plateau de poussée 40, contre lequel s'applique l'extrémité de la tige de commande 28 et qui possède plusieurs orifices 41, lesquels communiquent avec l'atmosphère extérieure à travers un filtre à air 42.

En conséquence, trois enceintes indépendantes 43, 44, et 45 sont définies à l'intérieur de la cuvette 29. La première communique avec l'enceinte de dépression 20 à travers un conduit 46; l'enceinte 45 communique avec le côté d'actionnement atmosphérique 21 de la chambre de dépression, par le conduit 47, et l'enceinte 44, comprise entre les deux obturateurs 33 et 36 dans la position de repos représentée aux figures 1 à 3, communique avec l'atmosphère extérieure à travers les orifices 41 et le filtre à air 42.

Le fonctionnement de ce dispositif de valve est conventionnel: en position de repos, représentée sur les figures, la dépression prélevée sur le collecteur d'admission du moteur parvient à la chambre 20 à travers un tube fixé à l'ouverture 48 et ainsi qu'à l'enceinte d'actionnement atmosphérique par le conduit 46, les enceintes 43 et 45, et le conduit 47: le piston 17 ne reçoit aucun accroissement de pression sur aucune de ses faces et l'ensemble est maintenu dans la position représentée moyennant un ressort non dessiné, lequel peut se trouver aussi bien à l'intérieur de la chambre de dépression qu'associé la tige d'assistance 26 sur un point extérieur adéquat de l'ensemble. Au début du freinage, tout d'abord la tige de commande 28 déplace vers la droite le manchon 38 et l'obturateur 36, permettant que l'obturateur 33 s'applique contre le siège 32, isolant ainsi les deux enceintes 43 et 45 l'une de l'autre, et par conséquent les enceintes 20 et 21 de la chambre de dépression. En continuant l'actionnement de la tige de commande 28, l'obturateur 36 se sépare de l'oburateur 33 de manière qu'à présent les enceintes 44 et 45 communiquent entre elles, c'est-à-dire, que l'enceinte atmosphérique 21 soit mise en communication avec l'atmosphère à travers le conduit 47, les enceintes 45 et 44, les orifices 41 etle filtre à air 42; la pression atmosphérique s'établit dans l'enceinte 21 et déplace le piston 19, et toutes les parties fixées à ce dernier, vers la droite de la figure, produisant l'actionnement des pistons du maître-cylindre. Bien qu'à la figure 1 on ait représenté la possibilité d'installer le maître-cylindre sur n'importe quel point adéquat du véhicule, indépendamment de la chambre de dépression 2, la figure 2 montre la possibilité de le former d'un pièce avec la paroi avant 13 de cette dernière; il pourrait également être fixé au moyen d'une platine adéquate sur les dispositifs de fixation appliqués aux orifices filetés 14 de la figure 1.

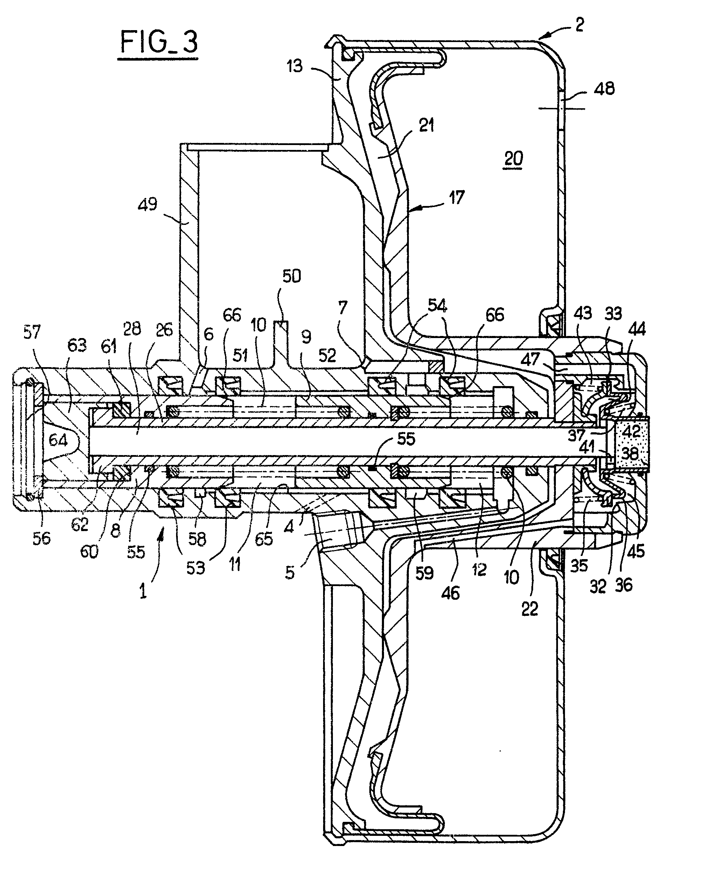

Conformément à la figure 3, la réalisation du moyen tubulaire 22 sur le piston 19 de la chambre de dépression se prête avantageusement à l'utilisation d'une autre caractéristique de l'invention. Le maître-cylindre 1, formé d'une pièce avec la paroi 13, est disposé de manière à ce qu'une partie de sa longueur se trouve logée à l'intérieur du moyeu tubulaire 22, de manière à réduire la longueur globale du système; bien que l'extrémité du moyen 22 dépasse ensuite de la chambre de dépression pendant le fonctionnement du dispositif. Cependant la section transversale dudit moyeu est beaucoup plus réduite que celle de la chambre de dépression 2, et il est relativement facile de prévoir un espace disponible correspondant à l'intérieur du compartiment du moteur.

A la figure 3 on a représenté également la possibilité d'utiliser un réservoir d'alimentation de fluide hydraulique d'une pièce avec l'ensemble, consistant en une paroi fermée 49 et une cloison tranversale de moindre hauteur 50 qui sépare les deux enceintes 51 et 52 d'où partent les conduits d'alimentation 6 et 7 pour les deux enceintes de freins du maître-cylindre tandem 1.

Les deux tiges, d'assistance 26 et de commande 28, s'étendent jusqu'à proximité de l'extrémité avant du maître-cylindre 1, et les deux pistons, le primaire 8 et le secondaire 9, sont tubulaires et ils coulissent librement à l'intérieur du cylindre, formant une fermeture hermétique avant ce dernier au moyen de paires de joints 53 et 54 disposés dans des gorges correspondantes de la surface intérieure, lisse, du cylindre, et avec la tige tubulaire d'assistance au moyen de joints 55. Les deux pistons sont maintenus en position au moyen d'une rondelle 56 et d'un anneau élastique 57.

Les deux pistons hydrauliques 8 et 9 ont leurs surfaces latérales cylindriques et lisses et les joints de chaque paire 53 et 54 sont respectivement de part et d'autre d'une rainure annulaire correspondante 58 et 59, communiquant avec les conduits 6 et 7 provenant des réservoirs 51 et 52. Le pistons primaire 8 possède un élargissement interne de manière à former un échelon intermédiaire 60,

lequel forme un siége pour une rondelle élastique 61, qui forme un bloc de réaction élastique. En conséquence, la tige d'assistance 26 comporte une collerette extérieure 62 qui s'appuie contre ladite rondelle. L'actionnement s'effectue à travers un corps coulissant 63 formant poussoir et coulissant à l'intérieur du piston primaire, pourvu d'un siège à rotule 64 ou de tout élément de connexion adéquat pour recevoir la tige à pédale et qui vient s'appuyer contre l'extrémité en saillie de la tige de commande 28 de la valve de commande 3. Le fonctionnement de ce dispositif de réaction élastique est classique.

Ainsi qu'on peut le constater, le circuit de freins 4 communique avec une ou plusieurs rainures 65, formées longitudinalement sur la surface intérieure du maître-cylindre hydraulique et qui s'étendent entre les joints les plus proches des deux paires 53 et 54. Conformément à cela, il n'est plus nécessaire de prévoir les distances habituelles de course entre le conduit 4 et les extrémités adjacentes des pistons, car la communication de l'enceinte 11 avec ledit conduit est assurée dans n'importe quelle position des pistons, à travers les rainures 65; la suppression desdites distances de course permet de réaliser une autre économie appréciable dans la longueur du maître-cylindre et dans le poids de matériau nécessaire à sa réalisation.

Le dispositif peut être complété avec l'autres détails conventionnels, par exemple les rainures ou les chanfreins 66 qui, dans la position de repos de l'ensemble, font communiquer les enceintes de frein 11 et 12 avec les gorges d'alimentation 58 et 59 correspondantes pour compenser les variations de volume d'origine thermique et les fuites éventuelles du fluide des circuits de freins.

Comme le montre la figure 2, on peut aussi prévoir avantageusement un couvercle protecteur 90 pour la valve 3, lequel est par exemple vissé sur un manchon fileté 91 faisant saillie extérieurement de la paroi 15.

Le fonctionnement du groupe amplificateur décrit est le suivant:

L'aspiration du moteur arrive dans l'enceinte de dépression 20 de la chambre 2 à travers un tube fixé à l'ouverture 48, et, à travers le conduit 46, les enceintes 43 et 45 de la valve de commande 3 et le conduit 47, se transmet également à l'enceinte d'actionnement atmosphérique 21, de sorte que le piston 17 n'est soumis à aucune pression de fluide et l'ensemble se maintient dans la position représentée par l'action d'un ressort non illustré.

En amorçant le freinage, le poussoir 63 déplace vers la droite la tige de commande 28 qui à son tour repousse la pièce 38 contre l'action du ressort 37, permettant que l'obturateur 33 soit appliqué contre le siège 32 par l'action du ressort 35. A partir de ce moment-là, les enceintes 43 et 45 sont isolées et par conséquent, les enceintes 21 et 20 de la chambre de dépression 2 le sont également.

En poursuivant l'actionnement, l'obturateur 36 se sépare de l'obturateur 33, de telle manière que l'enceinte 45 est connectée à l'enceinte 44, c'est-à-dire que l'enceinte d'actionnement atmosphérique 21 de la chambre de dépression 2 communique avec l'extérieur à travers le conduit 47, les enceintes 45 et 44, les orifices 41 et le filtre à air 42, et la pression atmosphérique qui s'établit dans l'enceinte 21 actionne le piston 17, de telle façon que la tige tubulaire d'assistance 26 agit au moyen de sa collerette 62 sur le piston primaire 8, à travers la rondelle de réaction élastique 61, donnant lieu à la course de freinage.

Lorsque l'action sur le poussoir 63 cesse, les différents éléments viennent à la position de repos représentée, sous l'action du ressort mentionné auparavant.

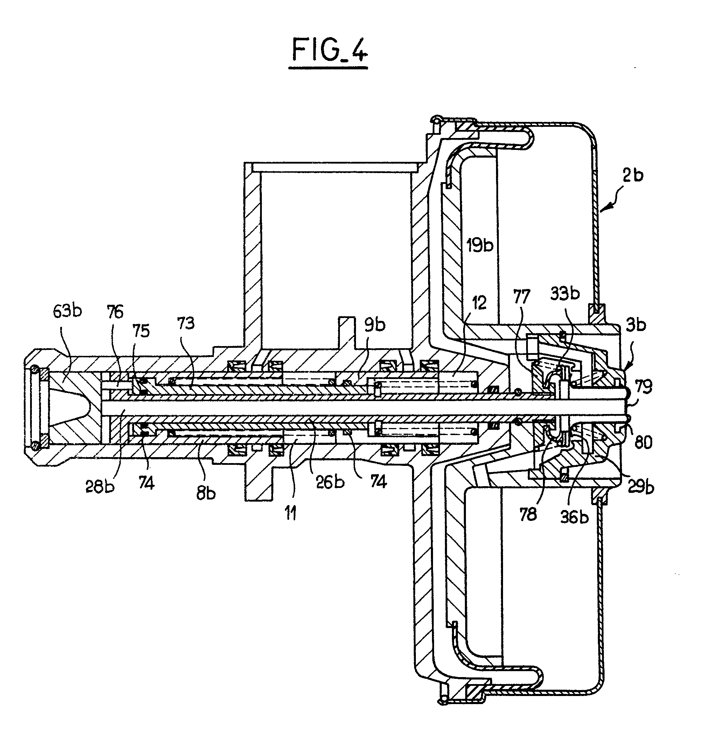

Dans le cas de la figure 4 on a prévu un dispositif de réaction hydraulique. Dans ce but, entre les pistons primaire 8b et secondaire 9b d'une part et la tige d'assistance 26b de l'autre, on a prévu un manchon 73, coulissant librement relativement aux deux éléments et s'ajustant hermétiquement, d'une part avec les pistons grâce à des joints 74 et de l'autre, avec la tige d'assistance au moyen d'un joint 75. Une extrémité du manchon débouche dans l'enceinte des freins 12, correspondant au piston secondaire, de telle manière qu'elle est soumise à la pression de travail du circuit de freins correspondant à cette enceinte. Ce manchon pourrait aussi comporter un échelon situé dans la chambre 11 pour remplir une fonction analogue. L'autre etrémité reçoit un tenon 76 guidé longitudinalement dans un orifice formé parallèlement à l'axe du cylindre et qui vient s'appuyeur contre le poussoir 63b, qui reçoit l'action de l'organe de commande des freins auquel s'applique de cette manière une force de réaction hydraulique, transmise par le manchon 73, et proportionnelle à la pression existant dans l'enceinte de travail 12.

Dans ce cas, la valve de contrôle 3b, bien que fonctionnement selon le même principe que dans les cas précédents, possède une construction légèrement différente.

La tige d'assistance 26b comporte en son extrémité correspondante un écrou 77 vissé qui la relie au plateau 19b du piston de la chambre de dépression 2b et qui présente une gorge annulaire sur laquelle se trouve fixé centralement un corps élastique en forme de cloche 78, dont le bord libre forme l'obturateur 33b analogue à ceux portant les mêmes références numériques dans les exemples précédents. La tige de commande 28b s'appuie contre le fond d'une pièce en forme de vase extérieurement cylindrique 79 qui s'ajuste hermétiquement au moyen d'un joint 80 sur un orifice correspondant du boîtier 29b et dont le bord élargi forme l'obturateur 36b, équivalent à ceux portant les mêmes références numériques des cas précédents.

Le fonctionnement de cette valve est le même que dans les exemples décrits auparavant et il se déduit clairement de la figure 4.

Dans les differents exemples décrits, certains éléments ou parties non mentionnés en référence ou décrits expressément sont plus ou moins conventionnels et leurs fonctions peuvent être facilement identifiées par le technicien.

On constate que l'invention atteint d'une manière particulièrement avantageuse les objectifs proposés. Tout particulièrement dans le cas de la figure 3, la combinaison de l'utilisation des rainures 65 avec le fait qu'une partie considérable de la longueur du maître-cylindre proprement dit se trouve logée à l'intérieur de la chambre de dépression, permet d'obtenir une réduction considérable de la longueur globale du groupe amplificateur de pression.

Revendications

1. Système générateur de pression de freinage, comprenant un maître-cylindre (1) comportant au moins un piston primaire (8, 8b) pour au moins un circuit de frein hydraulique couplé à un amplificateur de force de freinage à dépression (2, 2b) comportant une première (13) et une seconde (15) parois axialement opposées, un diaphragme ou piston (17, 19b) divisant l'amplificateur de force de freinage en une enceinte de dépression (20) et une enceinte atmosphérique (21), et une valve de commande (3, 3b) de l'amplificateur, disposée dans une partie de moyeu (22) du piston (17, 19b) et couplée mécaniquement, pour son actionnement, à un organe d'actionnement relié à la pédale de frein, le piston primaire (8, 8b) du maître-cylindre étant relié au piston de l'amplificateur par une tige creuse d'actionnement (26, 26b), caractérisé en ce que le maître-cylindre (1) est solidarisé à la première paroi (13) de l'amplificateur (2, 2b) correspondant à l'enceinte atmosphérique (21) et comporte, à son extrémité opposé à l'amplificateur (2, 2b), un poussoir coulissant (63, 63b), récepteur de la tige de pédale de frein, la valve de commande (3, 3b) communiquant en permanence avec l'atmosphère par un orifice central formé dans la seconde paroi (15) de l'amplificateur (2, 2b) correspondant à l'enceinte à dépression (20) et étant actionnée par une tige de commande (28) s'étendant dans la tige creuse d'actionnement (26, 26b) et couplée, à ses extrémités opposés, au poussoir coulissant (63, 63b) et à un organe mobile formant clapet (36, 36b) de la valve de commande (3, 3b).

2. Système selon la revendication 1, caractérisé en ce qu'il comprend un organe élastique annulaire de réaction (61) entre le poussoir coulissant (63, 63b) et le piston primaire (8, 8b).

3. Système selon la revendication 2, caractérisé en ce que la tige creuse d'actionnement (26, 26b) traverse axialement de façon étanche le piston primaire (8, 8b) et comporte, à son extrémité opposée l'amplificateur (2, 2b), une tête élargie (62) coopérant avec le piston primaire par l'intermédiaire de l'organe élastique annulaire de réaction (61).

4. Système selon l'une des revendications 1 à 3, caractérisé en ce que le poussoir (63) est monté à coulissement dans le piston primaire (8).

5. Système selon la revendication 1, caractérisé en ce qu'il comprend, dans le maître-cylindre (1), un dispositif de réaction hydraulique (73, 75).

6. Système selon la revendication 5, caractérisé en ce que le dispositif de réaction hydraulique comprend un manchon (73) entourant la tige creuse d'actionnement (26b) et coulissant de façon étanche par rapport à cette tige d'actionnement et par rapport à la surface annulaire intérieure du piston primaire (8b) du maître-cylindre, le manchon présentant une extrémité et/ou un échelon soumis à une pression hydraulique d'actionnement de freinage du maître-cylindre, et ayant son extrémité opposé à l'amplificateur (2) connectée mécaniquement (76) au poussoir coulissant (63b).

7. Système selon l'une des revendications précédentes, caractérisé en ce qu'une partie d'extrémité du maître-cylindre (1) s'étend à l'intérieur de l'enceinte atmosphérique (21) en traversant la première paroi (13) de l'amplificateur (2).

8. Système selon l'une des revendications précédentes, caractérisé en ce que le maître-cylindre (1) comporte un piston secondaire (9, 9b) disposé entre le piston primaire (8, 8b) et l'amplificateur (2) est traversé de façon étanche à coulissement par la tige creuse d'actionnement (26, 26b).

**Patentansprüche**

1. Bremsdruckerzeugungssystem, mit einem Hauptbremszylinder (1), welcher mindestens einen Primärkolben (8, 8b) für mindestens einen hydraulischen Bremskreis aufweist, der mit einem Unterdruck-Bremskraftverstärker (2, 2b) gekoppelt ist, welcher seinerseits aufweist: eine erste (13) und eine zweite (15) Wand, welche Wände sich in axialer Richtung gegenüberliegen, eine Membran oder einen Kolben (17, 19b) zum Unterteilen des Bremskraftverstärkers in einen unterdruckbeaufschlagten Arbeitsraum (20) und einen unter atmosphärischem Druck stehenden Arbeitsraum (21) sowie ein Steuerventil (3, 3b) des Bremskraftverstärkers, welches in einem Nabenabschnitt (22) des Kolbens (17, 19b) angeordnet ist und zur Betätigung mechanisch mit einem Betätigungsglied gekoppelt ist, welches seinerseits mit dem Bremspedal verbunden ist, wobei der Primärkolben (8, 8b) des Hauptbremszylinders mit dem Kolben des Bremskraftverstärkers durch eine hohle Betätigungsstange (26, 26b) verbunden ist, dadurch gekennzeichnet, dass der Hauptbremszylinder (1) fest mit der ersten Wand (13) des Bremskraftverstärkers (2, 2b) verbunden ist, welche den atmosphärischen Arbeitsraum (21) entspricht, und auf seinem vom Bremskraftverstärker (2, 2b) abliegenden Ende ein verschiebbares Druckstück (63, 63b) aufweist, welches die Stange des Bremspedales aufnimmt, dass das Steuerventil (3, 3b) ständig über eine mittige Öffnung mit der Atmosphäre in Verbindung steht, welche in der zweiten Wand (15) des Bremskraftverstärkers (2, 2b) ausgebildet ist, die dem Unterdruck-Arbeitsraum (20) entspricht, und über eine Betätigungsstange (28) betätigt wird, welche sich durch die hohle Betätigungsstange (26, 26b) erstreckt und an ihren einander gegenüberliegenden Enden mit dem verschiebbaren Druckstück (63, 63b) bzw. einem beweglichen Ventilverschlussteil (36, 36b) des Steuerventils (3, 3b) verbunden ist.

2. Bremsdruckerzeugungssystem nach Anspruch 1, dadurch gekennzeichnet, dass es ein ringförmiges elastisches Reaktionsteil (61) aufweist, welches zwischen dem verschiebbaren Druckstück (63, 63b) und dem Primärkolben (8, 8b) angeordnet ist.

3. Bremsdruckerzeugungssystem nach Anspruch 2, dadurch gekennzeichnet, dass die hohle Betätigungsstange (26, 26b) in axialer Richtung strömungsmitteldicht durch den Primärkolben (8, 8b) hindurchgeführt ist und an ihrem vom Bremskraftverstärker (2, 2b) abliegenden Ende einen vergrösserten Kopf (62) hat, welcher mit dem Primärkolben über das ringförmige elastische Reaktionsteil (61) zusammenarbeitet.

4. Bremsdruckerzeugungssystem nach einem der Ansprüche 1–3, dadurch gekennzeichnet, dass das Druckstück (63) verschiebbar im Primärkolben (8) angeordnet ist.

5. Bremsdruckerzeugungssystem nach Anspruch 1, dadurch gekennzeichnet, dass im Hauptbremszylinder (1) eine hydraulische Reaktionseinrichtung (73, 75) angeordnet ist.

6. Bremsdruckerzeugungssystem nach Anspruch 5, dadurch gekennzeichnet, dass das hydraulische Reaktionssystem eine Hülse (73) aufweist, welche die hohle Betätigungsstange (26b) umgibt und strömungsmitteldicht bezüglich der holhe Betätigungsstange und bezüglich der ringförmigen Innenfläche des Primärkolben (8b) des Hauptbremszylinders gleiten kann, wobei diese Hülse ein Ende und/oder eine Abstufung aufweist, die mit dem hydraulischen Bremsbetätigungsdruck des Hauptbremszylinders beaufschlagt ist, während sein vom Bremskraftverstärker (2) abgelegenes Ende mechanisch (76) mit dem verschiebbaren Druckstück (63b) verbunden ist.

7. Bremsdruckerzeugungssystem nach einem der Ansprüche 1–6, dadurch gekennzeichnet, dass ein Endabschnitt des Hauptbremszylinders (1) ins Innere des atmosphärischen Arbeitsraumes (21) geführt ist, indem er die erste Wand (13) des Bremskraftverstärkers (2) durchsetzt.

8. Bremsdruckerzeugungssystem nach einem der Ansprüche 1–7, dadurch gekennzeichnet, dass der Hauptbremszylinder (1) einen Sekundärkolben (9, 9b) aufweist, der zwischen dem Primärkolben (8, 8b) und dem Bremskraftverstärker (2) angeordnet ist und strömungsmitteldicht und in relativer Gleitbewegung von der hohlen Betätigungsstange (26, 26b) durchsetzt wird.

## Claims

1. A system for generating brake pressure comprising a master cylinder (1) having at least one primary piston (8, 8b) associated to at least one hydraulic brake circuit being coupled to a vacuum brake force amplifier (2, 2b) having first (13) and second (15) axially opposing walls, a diaphragm or piston (17, 19b) dividing the brake force aplifier into a vacuum chamber (20) and an atmospheric chamber (21), as well as a control valve (3, 3b) of the brake force amplifier being arranged in a hub portion (22) of the piston (17, 19b) and being mechanically coupled to an actuating member connected to the brake pedal for actuation thereof, the primary piston (8, 8b) of the master cylinder being connected to the piston of the brake force amplifier by means of a hollow actuating rod (26, 26b), characterized in that the master cylinder (1) is fixedly connected to a first wall (13) of the brake force amplifier (2, 2b) corresponding to the atmospheric chamber (21) and has a slidable thrust member (63, 63b) arranged at the end thereof being remote from the brake force amplifier (2, 2b) and receiving the rod of the brake pedal, the control valve (3, 3b) permanently communicating with the atmosphere through a central opening formed in the second wall (15) of the brake force amplifier (2, 2b) corresponding to the vacuum chamber (20) and being operated by an actuating rod (28) extending within the hollow actuating rod (26, 26b) and having its opposing ends coupled to the slidable thrust member (63, 63b) and a movable valve closure member (36, 36b) of the control valve (3, 3b), respectively.

2. The system as in claim 1, characterized in that it comprises an annular elastic reaction member (61) disposed between the slidable thrust member (63, 63b) and the primary piston (8, 8b).

3. The system as in claim 2, characterized in that the hollow actuating rod (26, 26b) is axially fed through the primary piston (8, 8b) in fluid-tight manner and has a larger diameter head (62) formed at its end being remote from the brake force amplifier (2, 2b), said head cooperating with the primary piston via the annular elastic reaction member (61).

4. The system as in one of claims 1–3, characterized in that the thrust member (63) is arranged in the primary piston (8) for sliding movement.

5. The system as in claim 1, characterized in that a hydraulic reaction system (73, 75) is incorporated into the master cylinder (1).

6. The system as in claims 5, characterized in that the hydraulic reaction system comprises a sleeve (73) surrounding the hollow actuating rod (26b) and being arranged for sliding fluid-tight movement with respect to said actuating rod and with respect to the annular interior surface of the primary piston (8b) of the master cylinder, said sleeve having one end and/or a stepped portion exposed to a hydraulic brake actuating pressure of the master cylinder, the end there-of being remote from the brake force amplifier (2) being mechanically (76) connected to the slidable thrust member (63b).

7. The system as in one of the preceding claims, characterized in that an end portion of the master cylinder (1) extends into the interior of the atmospheric chamber (21) extending through the first wall (13) of the brake force amplifier (2).

8. The system as in one of the preceding claims, characterized in that the master cylinder (1) comprises a secondary piston (9, 9b) arranged between the primary piston (8, 8b) and the brake force amplifier (2) and receiving in fluid-tight manner the hollow actuating rod (26, 26b) for sliding movement.

1/4

FIG_1

FIG. 2

FIG_3

## FIG.4